# EUROPÄISCHE PATENTSCHRIFT

(11) **EP 0 932 799 B1**
(45) Veröffentlichungstag und Bekanntmachung des Hinweises auf die Patenterteilung: **23.08.2000**
(21) Anmeldenummer: 97909280.6
(22) Anmeldetag: 13.09.1997
(51) Int. Cl.: F24D 5/00

(54) **GEBÄUDE MIT EINEM BEHEIZUNGSSYSTEM**
BUILDING WITH A HEATING SYSTEM
IMMEUBLE AVEC UN SYSTEME DE CHAUFFAGE

(30) Priorität: 02.10.1996 DE 29617136 U
(43) Veröffentlichungstag der Anmeldung: 04.08.1999
(73) Patentinhaber: Bickel, Dieter, 07747 Jena (DE)
(72) Erfinder: Bickel, Dieter, 07747 Jena (DE)
(74) Vertreter: Bock, Gerhard, Dipl.-Ing.
(86) Internationale Anmeldenummer: EP9705073
(87) Internationale Veröffentlichungsnummer: WO9814735

(56) Entgegenhaltungen:
- WO-A-92/17664
- DE-A- 3 238 757
- DE-A- 4 306 778
- DE-A- 4 408 096
- FR-A- 1 523 996
- US-A- 4 006 856

## Beschreibung

Die Erfindung betrifft ein Gebäude mit einem Beheizungssystem gemäß der Gattung der Patentansprüche und betrifft insbesondere Energiesparhäuser.

Es sind bereits Energiesparhäuser in den verschiedensten Ausführungen bekannt. Beispielsweise offenbart die DE 29 44 360 A1 ein Energiesparhaus für kalte Gegenden, das in einem Tiefgeschoß ein Raumheizaggregat, in den Außenwänden und in der Dachhaut wärmeisolierendes Material und ein Rohrleitungssystem enthält, das die Wärme vom Raumheizaggregat über den Fußboden jedes Raumes zum Beheizen des Raumes in diesen Raum einführt. Außerdem ist an der Sonnenseite des Gebäudes eine Solarenergie-Absorptionsanlage vorgesehen, die ebenfalls zur Warmlufterzeugung benutzt wird. Es sind also zwei komplette Raumheizanlagen erforderlich, die alternativ oder gleichzeitig zur Beheizung jedes Raumes benutzt werden.
Aus der DE 31 12 394 A1 ist die Verwendung einer Haupt- und einer Zusatzheizung bekannt. Die Hauptheizung wird mit nicht näher definierten Mitteln, möglicherweise mit Elektroenergie betrieben und dient der Herstellung einer Basistemperatur. Die Zusatzheizung dient der individuellen Beheizung und Belüftung eines Gebäudes und kann zumindest teilweise durch gebäudeeigene Abluft erwärmt werden.
Die US-PS 4 069 973 ein thermisches Verteilungs und Speichersystem, das u. a. Sonnenenergie zur Beheizung von Räumlichkeiten einsetzt. Eine vollkommene Nutzung und Erschließung der vorhandenen der natürlichen Energiequellen zur weitestgehenden Vermeidung von Umweltbelastungen ist damit allerdings noch nicht gegeben.
Schließlich ist aus der Vorveröffentlichung "5000 maisons solaires" von Jean-Pierre Franca und Jean-Pierre Baillon, Paris 1983, Edition du moniteur, Seite 247 ein unter Ausnutzung der Sonnenenergie beheizbares Haus bekannt, dessen Heizsystem im Sommer noch durch eine Frischluftheizung ergänzt werden kann. Der Sonnenheizung und der Frischluftheizung sind elektrisch oder mit Gas betriebene Zusatzheizungen zugeordnet, die unter mitteleuropäischen Bedingungen im Winter den größeren Teil der Heizleistung zu erbringen haben. Die Sonnenheizung ist als Warmwasserheizung gestaltet und ist gegen Leckagen anfällig.

Durch die Erfindung sollen eine weitere Verbesserung in der Ausnutzung vorhandener Energien und eine Vereinfachung des technischen Aufwandes für die benötigten Heizaggregate ermöglicht werden. Dieses Ziel soll durch eine spezifische Nutzung und Zufuhr der Wärmeträger in Abhängigkeit vom Gebäudeaufbau erreicht werden. Gleichzeitig sollen die COₓ- und NOₓ- Belastungen der Natur und die Risiken stark verringert werden, mit denen die Verwendung fossiler Brennstoffe bzw. die Nutzung der Kernenergie zur Wärmeerzeugung notwendigerweise verbunden sind.

Gemäß der Erfindung wird die gestellte Aufgabe durch die kennzeichnenden Merkmale des ersten Patentanspruchs gelöst. Auf diese Weise wird nicht nur die vorhandene Sonnenenergie, sondern auch die im Haus selbst entstandene warme Abluft optimal genutzt; das eventuell notwendige Zuheizen, vorzugsweise mit Elektroenergie, bei der Fußbodenheizung und/oder der Frischluftheizung kann wegfallen oder auf ein Minimum beschränkt werden. Hierzu muß das Gebäude ein mindestens zwei- besser drei- oder mehrschaliges Ständer-, vorzugsweise Fachwerkhaus sein, dessen Wärmedurchgangskoeffizient für die Außenmauern 0,15 W/m² nicht unterschreiten und 0,23 W/m² nicht überschreiten sollte. Im wesentlichen sind für das Untergeschoß eine Warmluft-Fußbodenheizung und für die Obergeschosse Frischluft-Deckenheizungen vorgesehen. Beide Heizungen können mit Wärmetauschern versehen sein. Anstatt eines Wärmetauschers kann in die Frischluftheizung auch eine Wärmepumpe integriert sein, wie sie bspw. in "Brockhaus Naturwissenschaft und Technik", Bd. 5 Seiten 233, 234, F. A. Brockhaus Verlag, Mannheim 1989 beschrieben ist; mit dieser läßt sich der Wirkungsgrad gegenüber dem Wärmetauscher von 75 %auf 90% erhöhen. Vorteilhaft sind die Bodenplatte des ersten und die Decken des zweiten Geschosses bzw. der oberen Geschosse mit Heizelementen sowie die Decken aller Geschosse mit Abluftelementen versehen. Bei Beheizung der Bodenplatte mit einer Warmluftheizung treten keine Dichtheitsprobleme auf wie bei einer Warmwasserheizung. Zur indirekten Erzeugung der Warmluft kann zwischen der solartechnischen Anlage und den Wärmetauschern ein Wasserkreislauf bestehen, so daß die Luft durch den Wasserkreislauf im Wärmetauscher erwärmt wird. Die Heizungen der Geschosse sind also Luftheizungen, wobei die Warmluft der Fußbodenheizung sich in einem geschlossenen Kreislauf befindet und die Warmluft der Deckenheizung frei durch die Geschosse bewegt wird. Die für die Warmluftheizung benötigte Frischluft wird zweckmäßigerweise durch ein in frostfreier Tiefe verlegtes Erdrohr angesaugt, dessen Länge bspw. gleich der Umfangslänge des Hauses ist. Vor der Erwärmung wird die angesaugte Luft einer Filterung unterzogen, um schädigende oder belästigende Bestandteile aus ihr zu entfernen. Die so angesaugte Frischluft kann besonders in der warmen Jahreszeit auch zur Kühlung der Räume im Gebäude benutzt werden.
Abweichend vom grundsätzlichen Aufbau können im Bedarfsfall Abluftelemente auch in den Außenwänden und/oder in der Nähe der Bodenplatte und/oder in den Decken vorgesehn sein. Für die Abluft vorzugsweise des Untergeschosses ist mindestens ein Wärmetauscher oder eine Wärmepumpe vorgesehen, durch den/die die zugeführte kalte Frischluft erwärmt wird. Zur hinreichenden Zirkulation der Warmluft im geschlossenen System der Fußbodenheizung und im offenen System der Heizung der Obergeschosse, der Frischluftheizung, ist jeweils mindestens ein Ventilator vorgesehen. Ebenso kann zur Zirkulation des Wassers im Kreislauf zwischen der solartechnischen Anlage und dem zugehörigen Wärmetauscher eine Pumpe vorgesehen sein. Zur Wärmespeicherung und Wasserversorgung wird der Wasserkreislauf durch einen großvolumigen Pufferspeicher geführt, dessen Inhalt nicht unter 350 Liter betragen sollte und der mit einer Wärmeisolierung und einer Zusatzheizung versehen sein kann; für ein Einfamilienhaus wird ein Pufferspeicher mit 350 bis 500 Liter Inhalt als ausreichend angesehen. In der geografischen Breite Mitteleuropas reicht im allgemeinen die vom Sonnen- oder Tageslicht in der Solaranlage induzierte Energie zur Beheizung des Gebäudes aus. Wenn aber die Warmwasserversorgung des Gebäudes aus dem Pufferspeicher vorgenommen wird und/oder auf einer geografischen Breite von Nordeuropa ist der Einbau einer Zusatzheizung günstig.

Die Erfindung wird nachstehend an Hand der schematischen Zeichnung eines Ausführungsbeispiels näher erläutert. Es zeigen:
- Fig. 1: einen Gebäudequerschnitt,
- Fig. 2: einen vergrößerten Ausschnitt aus der Außenwand des Gebäudes gemäß Fig. 1,
- Fig. 3: einen vergrößerten Ausschnitt aus dem Dach des Gebäudes gemäß Fig. 1,
- Fig. 4: einen vergrößerten Ausschnitt aus der Bodenplatte des Gebäudes gemäß Fig. 1,
- Fig. 5: einen Teil einer Beheizungseinrichtung für eine Bodenplatte und
- Fig. 6: einen Teil einer Beheizungseinrichtung für eine Deckenplatte.

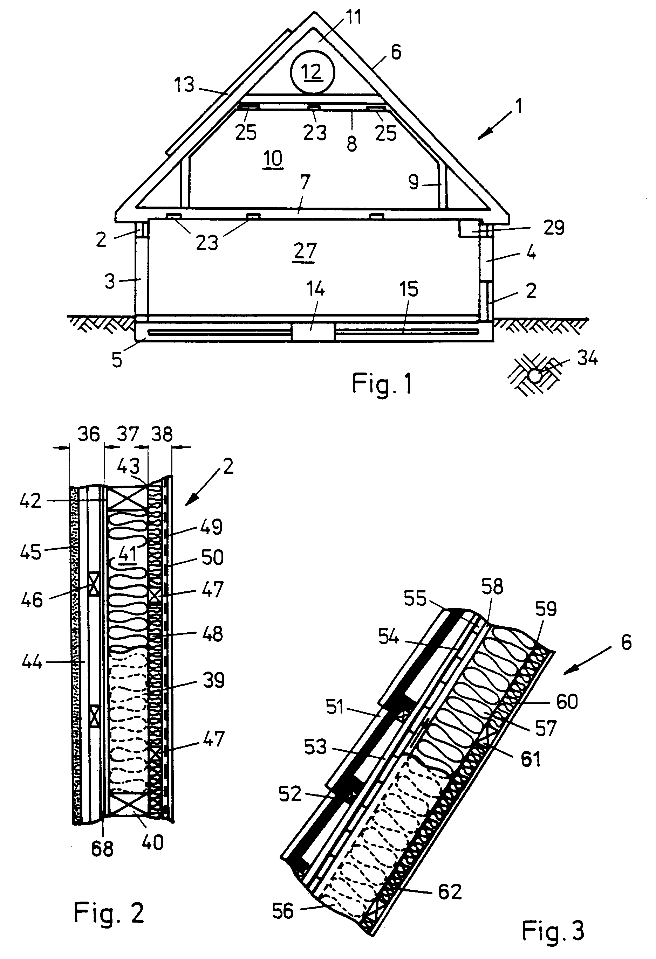

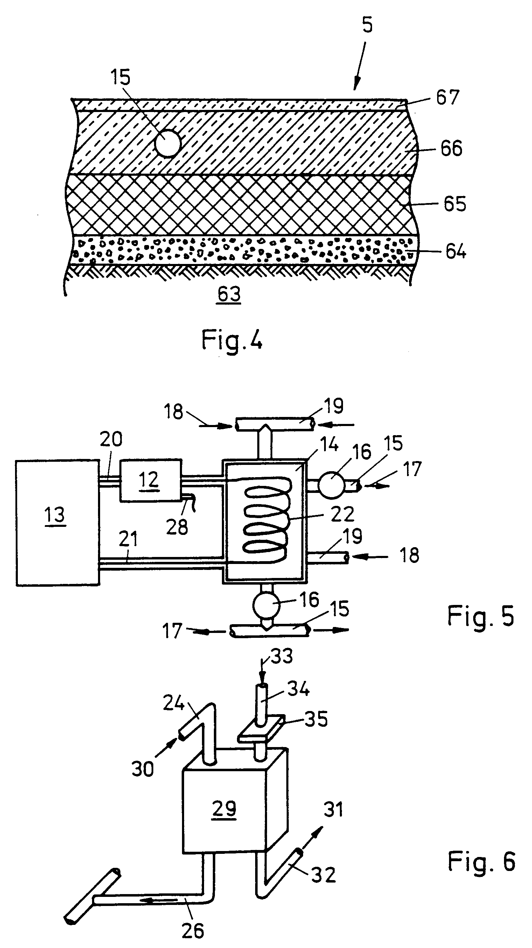

In Fig. 1 ist ein Fachwerkhaus 1 erkennbar, dessen dreischalige Außenwände 2 mit durch Fenster- oder Türen verschlossenen Öffnungen 3, 4 versehen und auf eine Bodenplatte 5 aufgesetzt sind. Das Haus 1 weist unter einem Satteldach 6 zwei Decken 7, 8 auf, die zusammen mit einem Trempel 9 ein Obergeschoß 10 einschließen. In einem Spitzboden 11 über dem Obergeschoß 10 ist ein Pufferspeicher 12 angeordnet. Auf der Südseite des Daches 6 befindet sich eine solartechnische Anlage 13. Die Bodenplatte 5 enthält einen Wärmetauscher 14 mit Luftkanälen 15 durch die Ventilatoren 16 (Fig. 5) im Wärmetauscher 14 erwärmte Heizluft 17 drücken. Die abgekühlte Heizluft 18 kommt durch Luftkanäle 19 in den Wärmetauscher 14 zurück.
Der Erwärmung der Heizluft 17 auf ca. 40°C dient die Solaranlage 13 von der aufgeheiztes Wasser durch eine wärmeisolierte Leitung 20, durch den wärmeisolierten Pufferspeicher 12 zu einer Heizschlange 22 o. dgl. im Wärmetauscher 14 und als abgekühltes Wasser durch Leitungen 21 zurück zur solartechnischen Anlage 13 geleitet wird. Mit Hilfe der Luftkanäle 15 wird die Bodenplatte 5 nahezu gleichmäßig auf bspw. 24 °C erwärmt. Anstatt der örtlich getrennten Kanäle 15, 19 für die erwärmte Heizluft 17 und abgekühlte Heizluft 18 können die Kanäle auch koaxial zueinander angeordnet sein.
Die Decken 7, 8 weisen Ausströmöffnungen 23 für warme Abluft auf, die an ein Rohrleitungssystem 24 (Fig. 6) angeschlossen sind. Ebenso sind in der Decke 8 Einströmöffnungen 25 für warme Frischluft vorgesehen, die an ein Rohrleitungssystem 26 angeschlossen sind. Ein zugehöriger Wärmetauscher 29, dessen Funktion zu Fig. 6 beschrieben wird und zu dem u. a. eine Erdleitung 34 führt. Selbstverständlich können Aus- und Einströmöffnungen 23, 25 sich auch an anderen Stellen des Obergeschosses 10 bzw. eines von der Bodenplatte 5, der Decke 7 und den Wänden 2 eingeschlossenen Untergeschosses 27 befinden.
Die Anordnung ist so getroffen, daß bspw. bei einem umbauten Raum von 250 m ³, einem Wärmedurchgangskoeffizienten K_{w} von 0,2 W/m² für die Außenhaut des Hauses 1, einer Außentemperatur von -15°C eine Aufheizung der Heizluft im Kanal 15 auf 45°C und im Rohrleitungssystem 24 auf 28°C erreichbar ist, so daß sich im Untergeschoß 27 eine Raumtemperatur von 24°C und im Obergeschoß eine Raumtemperatur von 18°C sich einstellt. Bei Querschnitten von 100 mm für die bspw. aus Wickelfalzrohren bestehenden Kanäle bzw. Rohrleitungssysteme der Warmluftheizungen wird ohne das Öffnen von Türen und Fenstern, allein durch die getroffene Heizungsanordnung, innerhalb von 2 bis 4 Stunden die Luft im gesamten Haus 1 ausgetauscht.

In Fig. 2 besteht die bspw. 34 cm dicke Außenwand 2 aus drei Schalen 36, 37, 38. Die Schale 37 ist die eigentlich tragende Schale (Fachwerk), mit Ständern 39, Riegeln 40 und einer die Zwischenräume ausfüllenden Schicht 41 von Mineralwolle, wobei die Ständer rechtwinklig zu den Riegeln 40, lotrecht und parallel zur Zeichenebene der Fig. 2 gerichtet sind. In Fig. 2 ist nur ein Ständer 39 aus Darstellungsgründen teilweise gezeichnet. Zum Halten der Mineralwolle 41 zwischen den Ständern und Riegeln 40 ist die Schale 37 einerseits (außen) mit einer Spanplatte 42 und andererseits mit einer eine Dampfsperre bildenden Folie 43 versehen, die zwar luftdurchlässig, aber nicht dampfdurchlässig ist. Die sich nach außen an die Schale 37 anschließende Schale 36 besteht aus einem auf Heraklitplatten 44 aufgetragenen Außenputz 45. Die Heraklitplatten 44 sind auf Querlatten 46 genagelt, welche ihrerseits mit den Riegeln 40 vernagelt sind, wobei zwischen den Riegeln 40 und der Querlattung 46 außer der Spanplatte 42 eine sog. Wasserlattung 68 zur Gewährleistung einer ausreichenden Luftzirkulation in der äußeren Schale 36 angeordnet ist. Die innen befindliche Schale 38 besitzt ein Riegelwerk 47, dessen Riegel im wesentlichen parallel zu den Latten 46 der Querlattung 46 und den Riegeln 40 der Schalen 36, 37 gerichtet und mit den Riegeln 40 verbunden sind. Die Zwischenräume des Riegelwerkes 47 sind ebenfalls mit Mineralwolle 48 ausgefüllt; das Riegelwerk 47 ist Träger von einer Lage Rauhspundbretter 49, mit denen Gipskartonplatten 50 vernagelt oder verschraubt sind. Die Schale 38 dient der Befestigung von Möbel, Bildern und anderen Gegenständen.

Der Dachausschnitt der Fig. 3 weist außen die aus Dachziegeln 51 bestehende Dachhaut auf, die an Dachlatten 52 angehängt sind. Die Dachlatten 52 liegen auf einer Lage von Konterlatten 53 und diese über eine Schicht Bitumenpappe 54 auf einer Rauhspundschalung 55 auf, deren Bretter im wesentlichen parallel zu den Dachlatten 52 gerichtet sind. Dachlatten 52, Konterlatten 53 und Rauhspundschalung 55 mit Bitumenpappe 54 sind mit Sparren 56 (von denen nur einer dargestellt und aus Darstellungsgründen abgebrochen gezeichnet ist) verbunden. Die Zwischenräume zwischen den in Fig. 3 parallel zur Zeichenebene gerichteten, hintereinanderliegenden Sparren 56 sind mit einer Schicht Mineralwolle 57 derart ausgefüllt, das zwischen den Konterlatten 53 und der Mineralwollschicht ein Luftraum bzw. eine Luftschicht 58 zur besseren Luftzirkulation besteht. Auch in diesem Fall ist eine Dampfsperre 59 vorgesehen, die die dickere Mineralwollschicht 57 von einer dünneren Mineralwollschicht 60 trennt, welche sich in der Ebene einer Sparschalung 61 befindet und als unteren Abschluß eine Schicht aus Gipskartonplatten 62 besitzt. Auch in diesem Fall ist ein dreischaliger Aufbau des Daches 6 zu erkennen, dessen Dicke etwa 33,5 cm beträgt.

Die Bodenplatte 5 umfaßt gemäß Fig. 4 auf gewachsenem Boden 63 bspw. eine Kiesschicht 64 von 10 cm Stärke, eine Hartschaumschicht 65 von 20 cm, eine Stahlbetonschicht 66 von 22 cm und eine Estrichschicht 67 von üblicherweise 4 cm Stärke. In der Stahlbetonschicht 66 sind Wickelfalzrohre 15 für die Luftführung der Fußbodenheizung verlegt. Durch den dreischaligen Aufbau des Hauses 1 beträgt der Wärmebedarf pro Jahr nur 46 kW/m².

Die Fig. 5 dient der Erläuterung der prinzipiellen Wirkungsweise der Bodenplattenheizung, für die die Solaranlage 13, der Pufferspeicher 12, der Wärmetauscher 14 und die Luftkanäle 15, 19 wesentlich sind. Eine geringfügige Nachheizung der Heizluft in den Luftkanälen 15 und damit der Abluft des Untergeschosses 27 und der Heizluft des Obergeschosses 10, bspw. an kalten Tagen, ist mit Hilfe einer elektrischen Heizpatrone 28 im Pufferspeicher 12 möglich. Dies kann automatisch mit Hilfe von nicht dargestellten Temperaturmeßfühlern und Thermostaten im Untergeschoß 27 bzw. im Obergeschoß 10 veranlaßt werden. Außerdem kann in den Leitungen 20, 21 eine Pumpe zur Förderung des Wasserumlaufs vorgesehen sein.

In Fig. 6 ist ein im Gegenstrom arbeitender Wärmetauscher (Abgaswärmetauscher) 29 erkennbar, in den die warme Abluft 30 aus den Ausströmöffnungen 23 über ein Rohrleitungssystem 24 einströmt und als kalte Abluft 31 durch eine Rohrleitung 32 verläßt. Die warme Abluft 30 gibt ihre Wärme an kalte Frischluft 33 ab, die durch die Leitung 34 und ein Filter 35 in den Wärmetauscher 29 gelangt, die gesondert geführte warme Abluft 30 umspült, deren Wärme aufnimmt und über das Rohrleitungssystem 26 zu den Einströmöffnungen 25 zur Beheizung des Obergeschosses 10 gelangt. Der Abgaswärmetauscher 29 kann ebenso wie der Wasserspeicher 12 mit einer Zusatzheizung versehen sein.

Die Erfindung ist weder an ein Gebäude 1 mit einer bestimmten Anzahl von Geschossen 10, 27 noch von Räumen gebunden. Anstatt des Abgaswärmetauschers 29 kann auch eine Wärmepumpe Verwendung finden. Die kalte Frischluft 33 kann durch eine in der Erde neben dem Haus (Gebäude) 1 über eine genügend lange Strecke, bspw. den Hausumfang verlegte Leitung zum Wärmetauscher 29 oder zur Wärmepumpe befördert werden. Günstigerweise wird die Leitung nicht im möglichen Frostbereich verlegt. Dadurch wird die Frischluft gekühlt und kann im Sommer zur Kühlung verwendet werden; ein Wärmetausch findet dann weder bei der Frischluftheizung noch bei der Fußbodenheizung statt. Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: - (Fachwerk-)Haus
- 2: - Außenwände
- 3, 4: - (Fenster-, Tür-)Öffnungen
- 5: - Bodenplatte
- 6: - (Sattel-)Dach
- 7, 8: - Decken
- 9: - Trempel
- 10: - Obergeschoß
- 11: - Spitzboden
- 12: - Pufferspeicher (Wasserspeicher)
- 13: - solartechnische Anlage (Solaranlage)
- 14, 29: - Wärmetauscher
- 15, 19: -Luftkanäle
- 16: - Ventilatoren
- 17, 18: - Heizluft
- 20, 21: - Leitungen
- 22: - Heizschlange
- 23: - Ausströmöffnungen
- 24, 26: - Rohrleitungssysteme
- 25: - Einströmöffnungen
- 27: - Untergeschoß
- 28: - Heizpatrone
- 30, 31: - Abluft
- 32, 34: - Rohrleitungen
- 33: - Frischluft
- 35: - Filter
- 36, 37, 38: - Schalen
- 39: - Ständer
- 40: - Riegel
- 41, 48, 57: - (Schicht) Mineralwolle
- 42: - Spanplatte
- 43: - Folie
- 44: - Heraklitplatten
- 45: - Außenputz
- 46: - Querlatten
- 47: - Riegelwerk
- 49: - Rauhspundplatten
- 50, 62: - Gipskartonplatten
- 51: - Dachziegel
- 52: - Dachlatten
- 53: - Konterlatten
- 54: - Bitumenpappe
- 55: - Rauhspundschalung
- 56: - Sparren
- 58: - Luftschicht
- 59: - Dampfsperre
- 60: - Mineralwollschicht
- 61: - Sparschalung
- 63: - Boden
- 64: - Kiesschicht
- 65: - Hartschaumschicht
- 66: - Stahlbetonschicht
- 67: - Estrichschicht
- 68: - Wasserlattung

## Patentansprüche

1. Gebäude (1) mit einem Beheizungs- und Kühlsystem, das eine mit Sonnenwärme betriebene Fußbodenheizung (13, 14, 15, 19) und eine Frischluftheizung (24, 26, 29, 32, 34) aufweist, dadurch gekennzeichnet, daß in einem mindestens zweischaligen Ständerhaus die Fußbodenheizung einen geschlossenen Luflkreislauf (15, 19) aufweist, der in einem zugehörigen Wärmetauscher (14) durch einen von einer Solaranlage (13) beheizten geschlossenen Wasserkreislauf (20, 21) erwärmt wird, und daß die Frischluftheizung mit einer Rohrleitung (34) verbunden ist, die zum Wärmetausch über eine genügend lange Strecke neben dem Gebäude in der Erde, möglichst nicht im Frostbereich, verlegt ist.

2. Gebäude gemäß Anspruch 1, dadurch gekennzeichnet, daß die Außenwände (2) des Gebäudes (1) einen Wärmedurchgangskoeffizienten Kₘ von 0,15 bis 0,23 W/m² haben.

3. Gebäude gemäß Anspruch 2, dadurch gekennzeichnet, daß das Ständerhaus ein Fachwerkhaus ist.

4. Gebäude gemäß mindestens einem der Ansprüche 1 bis 3, dadurch gekennzeichnet, daß dem Erdrohr (34) der Frischluftheizung ein Wärmetauscher (29) zugeordnet ist, in dem die Abluft (30) ihre Wärme an die Frischluft (33) abgibt.

5. Gebäude gemäß Anspruch 1, dadurch gekennzeichnet, daß die Fußbodenheizung sich in einer Gebäudebodenplatte (5) oder Kellerdecke befindet.

6. Gebäude gemäß Anspruch 1 oder 5, dadurch gekennzeichnet, daß der zur Fußbodenheizung gehörende Wärmetauscher (14) in der Bodenplatte (5) oder Kellerdecke des Gebäudes befindet.

7. Gebäude gemäß Anspruch 1, gekennzeichnet durch einen großvolumigen Wasserspeicher (12), der von der Solaranlage (13) über einen Wärmetauscher erhitzt wird.

8. Gebäude gemäß Anspruch 1, dadurch gekennzeichnet, daß die Frischluftheizung mit einer Wärmepumpe versehen ist.

9. Gebäude gemäß Anspruch 4, dadurch gekennzeichnet, daß die angesaugte Frischluft (33) vor ihrer Erwärmung im zugehörigen Wärmetauscher (29) durch Filter (35) geleitet wird.

10. Gebäude gemäß Anspruch 1 oder 4, dadurch gekennzeichnet, daß sich Einströmöffnungen (25) der Frischluftheizung in der Decke (8) eines jeweiligen Gebäudegeschosses (10) befinden.

11. Gebäude gemäß Anspruch 1 oder 4, dadurch gekennzeichnet, daß Ausströmöffnungen (23) für die Abluft (30, 31) sich in der Decke (7, 8) des jeweiligen Gebäudegeschosses (10, 27) befinden.

12. Gebäude gemäß Anspruch 1, dadurch gekennzeichnet, daß die Frischluft (33) zur Kühlung benutzt wird.

13. Gebäude gemäß Anspruch 1 oder 7, dadurch gekennzeichnet, daß den wärmeabgebenden Kreisläufen (20, 21; 24, 32) von Fußbodenheizung und/oder Frischluftheizung und/oder dem Warmwasserspeicher (12) Zusatzheizungen (28) zugeordnet sind.

14. Gebäude gemäß Anspruch 5, dadurch gekennzeichnet, daß im Wasserkreislauf der Fußbodenheizung eine Pumpe vorgesehen ist.

15. Gebäude gemäß Anspruch 1 oder 4, dadurch gekennzeichnet, daß im Luftkreislauf (15, 19) für die Fußbodenheizung und/oder in Rohrleitungen (34) für die Frischluft (33) und/oder in Rohrleitungen (32) für die Abluft (30, 31) Ventilatoren (16) vorgesehen sind.

## Claims

1. Building (1) with a heating system and a cooling system comprising a solar heat operated underfloor heating (13, 14, 15, 19) and a fresh-air heating (24, 26, 29, 32, 34) characterized in that in an at least two-shell post-and-lintel construction the underfloor heating exhibits a closed air circulation (15, 19) which in an associated heat-exchanger (14) is heated by a closed water-circuit (20, 21) heated, in turn, by a solar plant (13), and in that the fresh-air heating is connected to a pipe (34) which is buried via a sufficiently long path in the soil beside the building for heat-exchange, advantageously at a non-frost-susceptible level.

2. Building as claimed in claim 1, wherein the outer walls (2) of the building (1) have a heat transition coefficient Kₘ of from 0.15W/m² to 0.23W/m².

3. Building as claimed in claim 2, wherein the post-and-lintel construction is a framework house.

4. Building as claimed in at least one of the claims 1 to 3, wherein the pipe (34) in the soil of the fresh-air heating is followed by a heat-exchanger (29) in which the waste air (30) transmits its heat to the fresh-air (33).

5. Building as claimed in claim 1, wherein the underfloor heating is arranged in a ground-plate (5) of the building or in the ceiling of the cellar.

6. Building as claimed in claim 1 or 5, wherein the heat-exchanger (14) associated to the underfloor heating is located in the ground plate (5) or in the ceiling of the cellar of the building.

7. Building as claimed in claim 1, wherein a large-volume warm-water storage (12) is provided, heated by the solar-plant (13) via a heat-exchanger.

8. Building as claimed in claim 1, wherein the fresh-air heating is provided with a heat-pump.

9. Building as claimed in claim 4, wherein the taken-in fresh-air (33) passes a filter (35) before being heated in the associated heat-exchanger (29).

10. Building as claimed in claim 1 or 4, wherein the entry openings (25) of the fresh-air heating are arranged in the ceiling (8) of the respective story (10) of the building.

11. Building as claimed in claim 1 or 4, wherein the exit openings (23) for the waste air (30, 31) are arranged in the ceiling (7, 8) of the respective story (10, 27) of the building.

12. Building as claimed in claim 1, wherein the fresh air (33) is used for cooling.

13. Building as claimed in claim 1 or 7, wherein additional heatings (28) are associated to the heat delivering circulations (20, 21, 24, 32) of the underfloor heating and/or of the fresh air heating and/or of the warm water tank (12).

14. Building as claimed in claim 5, wherein a pump is provided in the underfloor heating water circulation.

15. Building as claimed in claim 1 or 4, wherein fans (16) are provided in the air circulation (15, 19) of the underfloor heating and/or in the pipe (34) of the fresh air (32) and/or in the duct system (32) of the waste air (30, 31).

## Revendications

1. L'immeuble (1), équipé d'un système de chauffage et de climatisation, comprenant le chauffage par le sol (13, 14, 15, 19) par énergie solaire et système de chauffage à air chaud avec air évacué à l'extérieur (24, 26, 29, 32, 34) est caractérisé en ce que, dans une maison à structure charpentée, avec montants verticaux, présentant au moins deux coques, d'une part le système de chauffage par le sol fonctionne par la circulation de l'air dans un circuit fermé (15 ,19), où, dans un échangeur de chaleur adapté (14), l'air est chauffé à l'aide d'un circuit d'eau fermé (20 ,21) chauffé par l'énergie solaire collectée dans un insolateur (13), et que d'autre part le système de chauffage à air chaud avec air évacué à l'extérieur est relié à une gaine (34) posée dans la terre et longeant le bâtiment sur une distance suffisamment grande et de préférence passant par des zones à l'abri du gel.

2. L'Immeuble selon la revendication 1 est caractérisé en ce que le coefficient Kₘ de transmission calorifique pour les parois extérieures (2) est égal à 0,15 à 0,23 W/m².

3. L'immeuble selon la revendication 2 est caractérisé en ce que la maison est une maison à colombage avec montants verticaux soutenant la charpente.

4. L'Immeuble selon au moins une des revendications 1 à 3 est caractérisé en ce que la conduite (34) posée dans la terre, du système de chauffage à air avec air chaud d'évacuation est reliée à un échangeur de chaleur (29) à l'intérieur duquel l'air à évacuer (30) transmet sa chaleur à l'air amené de l'extérieure (33).

5. L'Immeuble selon la revendication 1 est caractérisé en ce que le chauffage par le sol est intégré dans le plancher-dalle (5) de l'immeuble ou dans le plafond de la cave.

6. L'immeuble selon la revendication 1 ou 5 est caractérisé en ce que l'échangeur de chaleur (14) faisant partie du système de chauffage par le sol est intégré dans le plancher-dalle (5) ou dans le plafond de la cave de la maison.

7. L'Immeuble selon la revendication 1 est caractérisé en ce qu'il est équipé d'un réservoir d'eau (12) de grande contenance qui est chauffé par l'insolateur (13) à l'aide d'un échangeur de chaleur.

8. L'Immeuble selon la revendication 1 est caractérisé en ce que le chauffage à air chaud avec air évacué à l'extérieur est doté d'une pompe de chaleur.

9. L'Immeuble selon la revendication 4 est caractérisé en ce que l'air (33) amené par aspiration de l'extérieur passe par un filtre (35) avant d'entrer dans l'échangeur de chaleur correspondant (29).

10. L'Immeuble selon la revendication 1 ou 4 est caractérisé en ce que les orifices d'introduction (25) du chauffage à air chaud avec air évacué à l'extérieure sont intégrés dans le plafond (8) d'un étage à correspondant (10).

11. L'Immeuble selon la revendication 1 ou 4 est caractérisé en ce que les orifices (23) pour évacuer l'air (30, 31) sont intégrés dans le plafond (7, 8) de l'étage correspondant (10, 27).

12. L'immeuble selon la revendication 1 est caractérisé en ce que l'air amené de l'extérieur (33) peut être utilisé pour la climatisation.

13. L'immeuble selon la revendication lou 7 est caractérisé en ce que les circuits chauffants (20, 21; 24, 32 ) du chauffage par le sol et/ou du chauffage à air chaud avec air à évacuer et/ou le réservoir d'eau chaude (12) sont équipés de dispositifs chauffants complémentaires (28).

14. L'immeuble selon la revendication 5 est caractérisé en ce que le circuit à eau du système de chauffage par le sol est équipé d'une pompe.

15. L'Immeuble selon la revendication 1 ou 4 est caractérisé en ce que des ventilateurs (16) sont montés dans les circuits d'air (15, 19) pour le chauffage par le sol et/ou dans les gaines (34) amenant l'air frais (33) de l'extérieur et/ou dans les gaines (32) assurant l'évacuation de l'air à l'extérieure (30, 31).
